(19) Europäisches Patentamt
European Patent Office
Office européen des brevets

(11) **EP 4 715 738 A1**

(12) **EUROPEAN PATENT APPLICATION**

(43) Date of publication:
**25.03.2026 Bulletin 2026/13**

(21) Application number: **24209573.5**

(22) Date of filing: **29.10.2024**

(51) International Patent Classification (IPC):
*G06T 7/149* (2017.01)  *G06T 17/20* (2006.01)

(52) Cooperative Patent Classification (CPC):
**G06T 7/149; G06T 17/20;** G06T 2210/41

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.09.2024 PT 2024119706**

(71) Applicants:
• **Universidade do Minho**
**4704-553 Braga (PT)**
• **Instituto Politécnico do Cávado e do Ave**
**4750-810 Barcelos (PT)**

(72) Inventors:
• **MONTEIRO QUEIRÓS, Sandro Filipe**
**4700-371 BRAGA (PT)**
• **GOMES DA FONSECA, João Luis**
**4795-161 SANTO TIRSO (PT)**
• **ARAÚJO MARTINS VILAÇA, João Luis**
**4715-566 BRAGA (PT)**
• **RODRIGUES LIMA, Estevão Augusto**
**4050-499 PORTO (PT)**
• **NUNES CORREIA PINTO, Jorge Manuel**
**4150-375 PORTO (PT)**

(74) Representative: **Patentree**
**Edificio Net**
**Rua de Salazares, 842**
**4149-002 Porto (PT)**

(54) **DEVICE AND METHOD FOR OBTAINING A FULL-SURFACE ESTIMATE OF AN ORGAN FROM A RECEIVED PARTIAL ANATOMICAL POINT CLOUD**

(57) Device and method for obtaining a point cloud full-surface estimate of an organ, configured to estimate pose, size and shape of the organ from received medical imaging data comprising a partial-surface point cloud of the organ, the device comprising an electronic data processor adapted to perform said full-surface estimate, and comprising:
a pose estimator arranged to estimate the pose and size of the received partial-surface point cloud and to convert the received partial-surface point cloud to a partial-surface point cloud which is canonical in pose and size, a shape estimator arranged to estimate the shape of the transformed partial-surface point cloud using a predetermined statistical shape model of the organ, and a point cloud reconstructor arranged to output the point cloud full-surface estimate of the organ.

Processed by Luminess, 75001 PARIS (FR)

**Description**

**TECHNICAL FIELD**

The present disclosure relates to a device and method for obtaining a full-surface estimate of an organ from a received partial anatomical point cloud, namely an artificial intelligent system for surface reconstruction from partial point set data. In particular, the disclosure relates to a system for surface reconstruction from partial point set data using a deep learning (DL) architecture and statistical shape models (SSMs).

**BACKGROUND**

Although substantial work has been done over the years for solving the point set registration problem, less attention has been given to the reconstruction of complete surfaces from partial data. Indeed, when using point set registration algorithms, in most cases, the surface to be reconstructed should be known a priori (or an approximation of it, like an average shape model), with the algorithm (e.g. ICP [BesIMcKay1992] or CPD [MyronenkoSong2010]) simply trying to register the assumed complete shape with the acquired partial one. This is sub-optimal as the method then fails to recover an accurate, personalized surface. Contrarily, the Dependent Landmark Drift (DLD) algorithm [Hirose2018] allows to describe the complete point set based on an SSM, which allows to recover plausible shapes without knowledge of the specific object to be reconstructed. Nonetheless, this strategy presents sub-optimal performance when the acquired partial data covers only a small part of the full object to be reconstructed (high data sparsity). This occurs because the simultaneous optimization of pose and shape becomes ill-posed. In [Khallaghi2015a, Khallaghi2015b], the authors propose a point set fusion strategy using a strategy like the latter but assume both surfaces are either partially or fully known, which does not occur in most cases. In its turn, DL-based shape reconstruction strategies (like [Wang, Chen and Fang, Wang et al]) tend to assume the input partial data is in a canonical orientation, i.e. its pose is known, and thus only shape must be estimated. Hereto, we try to reconstruct the surface of an unknown object in an unknown pose, focusing specifically in situations with partial point sets with low coverage.

These facts are disclosed in order to illustrate the technical problem addressed by the present disclosure.

**GENERAL DESCRIPTION**

The present disclosure relates to a system for surface reconstruction from partial point set data using a deep learning architecture and statistical shape models (SSMs).

The disclosure is advantageous in providing an end-to-end deep learning method and device that, from a point cloud representing the partial acquisition of an object of interest (e.g., a given organ or other anatomical structure), simultaneously estimates the object's shape and pose, allowing to reconstruct its full surface.

The disclosure also allows to use a deep learning method and device, trained end-to-end, to simultaneously predict the pose (rotation, translation and, optionally, scaling) and the shape (SSM shape vector and, optionally, per-point displacement vectors), and automatically extract the (oriented) full reconstructed surface of the object of interest.

The present disclosure presents the following features/advantages:

- A multi-task deep learning architecture, trained end-to-end to provide high-quality surface reconstruction performance, comprising:

    - An iterative pose estimator module that predicts the pose of the input partial point set (rotation, translation and, optionally, scaling), allowing to align it with a canonical pose. It predicts an orthogonal matrix (hence a valid rotation matrix) in the full range of rotations;
    - A shape estimator module that predicts the shape of the partial point set when in a canonical pose, modelling using a statistical shape model of the object of interest. Optionally, a per-point displacement vector may jointly be predicted;
    - A non-learnable module to reconstruct the full surface from the predicted pose and shape;

- Together, it can cope with partial point sets without a priori knowledge of the object's shape or its pose;
- It is a learning-based approach that can leverage a large collection of partial/complete point set pairs to cope with low object coverage situations (when the available partial point set covers only a small part of the full object, e.g., <60%) with high reconstruction performance;
- It presents high computational throughput, enabling its use in (near) real-time scenarios (e.g., during surgeries);
- Besides its use in cases in which the shape to be reconstructed is unknown, it may also be used for pose prediction and/or shape "refinement" when the shape to be extracted is known (or a good approximation of it exists; e.g. the full surface has been previously extracted using the same or another imaging modality);
- It presents flexibility to handle distinct objects and various transformation models (SSM-based only or fully non-rigid).

It is thus disclosed an artificial intelligent system for surface reconstruction from partial point set data.

It is disclosed a device for obtaining a full-surface estimate of an organ [i.e. a differentiated body structure for performing a specific body function], configured to estimate pose, size and shape of the organ from received medical imaging data comprising a partial-surface point cloud of the organ, the device comprising an electronic data processor adapted to perform said full-surface estimate, and comprising:

a pose estimator arranged to estimate the pose and size of the received partial-surface point cloud and to convert the received partial-surface point cloud to a partial-surface point cloud which is canonical in pose and size [i.e. a predetermined standard of size, orientation, and location], comprising:

an artificial neural network arranged to estimate a rotation matrix, a translation vector and a scale factor of the received partial-surface point cloud;
a similarity spatial transformer arranged to output a similarity transformation of the partial-surface point cloud by translating by the estimated translation vector, rotating by the estimated rotation matrix, and scaling by the estimated scale factor;

a shape estimator arranged to estimate the shape of the transformed partial-surface point cloud using a predetermined statistical shape model of the organ defined by shape parameters, comprising:
an artificial neural network arranged to estimate, from the transformed partial-surface point cloud, said shape parameters modelled from the statistical shape model as shape reconstruction parameters.

Equivalently, instead of a rotation matrix, any other equivalent representation of a rotation can be used.
In an embodiment, the pose estimator is an iterative pose estimator for converting the received partial-surface point cloud to a partial-surface point cloud which is canonical in pose and size, comprising:

said artificial neural network, arranged to estimate an incremental rotation matrix, an incremental translation vector and an incremental scale factor of an updated partial-surface point cloud from an iteratively updated partial-surface point cloud initialized with the received partial-surface point cloud;
an updatable pose estimate storage arranged to update a currently stored pose estimate comprising the estimated rotation matrix, translation vector and scale factor with the estimated incremental rotation matrix, incremental translation vector and incremental scale factor;
said similarity spatial transformer, arranged to do a similarity transformation of the iteratively updated partial-surface point cloud by translating by the estimated incremental translation vector, rotating by the estimated incremental rotation matrix and scaling by the estimated incremental scale factor, and output the iteratively updated partial-surface point cloud.

It is also disclosed a device for obtaining a point cloud full-surface estimate of an organ, further comprising:
a point cloud reconstructor arranged to output the point cloud full-surface estimate of the organ, comprising:

a sampler arranged to sample full-surface points from the shape model of the organ parametrized with the shape reconstruction parameters;
a similarity spatial transformer arranged to output a similarity transformation of the sampled full-surface points by inverse rotating by the estimated rotation matrix, scaling by the multiplicative inverse of the estimated scale factor and translating by the negative of the estimated translation vector.

It is disclosed a device for obtaining a full-surface estimate of an organ [differentiated body structure for performing a specific body function], configured to estimate pose, size and shape of the organ from received medical imaging data comprising a partial-surface point cloud of the organ, the device comprising an electronic data processor adapted to perform said full-surface estimate, and comprising:

a pose estimator arranged to estimate the pose of the received partial-surface point cloud and to convert the received partial-surface point cloud to a partial-surface point cloud which is canonical in pose [i.e. a predetermined standard of orientation and location], comprising:

an artificial neural network arranged to estimate a rotation matrix and a translation vector of the received partial-surface point cloud;
a rigid spatial transformer arranged to output a rigid transformation of the partial-surface point cloud by translating by the estimated translation vector and rotating by the estimated rotation matrix;

a shape estimator arranged to estimate the shape of the transformed partial-surface point cloud using a predetermined statistical shape model of the organ defined by shape parameters, the model embedding a scale component, comprising:
an artificial neural network arranged to estimate, from the transformed partial-surface point cloud, said shape parameters modelled from the statistical shape model as shape reconstruction parameters, including a scaling component.

The scale component may be scalar or multi-dimensional, depending on the selected statistical shape model.

In an embodiment, the pose estimator is an iterative pose estimator for converting the received partial-surface point cloud to a partial-surface point cloud which is canonical in pose, comprising:

said artificial neural network, arranged to estimate an incremental rotation matrix and an incremental translation vector of an updated partial-surface point cloud from an iteratively updated partial-surface point cloud initialized with the received partial-surface point cloud;
an updatable pose estimate storage arranged to update a currently stored pose estimate comprising the estimated rotation matrix and translation vector with the estimated incremental rotation matrix and incremental translation vector;
said rigid spatial transformer, arranged to do a rigid transformation of the iteratively updated partial-surface point cloud by translating by the estimated incremental translation vector and rotating by the estimated incremental rotation matrix, and output the iteratively updated partial-surface point cloud.

It is also disclosed a device for obtaining a point cloud full-surface estimate of an organ, further comprising:
a point cloud reconstructor arranged to output the point cloud full-surface estimate of the organ, comprising:

a sampler arranged to sample full-surface points from the shape model of the organ parametrized with the shape reconstruction parameters;
a rigid spatial transformer arranged to output a rigid transformation of the sampled full-surface points by inverse rotating by the estimated rotation matrix and translating by the negative of the estimated translation vector.

In an embodiment, the shape estimator is further arranged to estimate a sparsely defined displacement field allowing the non-rigid deformation of the reconstructed surface, by carrying out the steps of:

mapping the concatenation between shape parameters modelled from the statistical shape model and a dimensionally-reduced representation of the transformed partial-surface point cloud into a three-dimensional sparse displacement vector field;
interpolating a per-point displacement vector for the sampled full-surface points from the vector field;
non-rigidly deforming the sampled full-surface points using the interpolated per-point displacement vectors.

In an embodiment, the rotation matrix is an orthogonal rotation matrix.

In an embodiment, the artificial neural network of the pose estimator is an encoder-decoder artificial neural network comprising an encoder arranged for dimensionality reduction of the received partial-surface point cloud and, if being the case, of the iteratively updated partial-surface point cloud, and a decoder for estimating pose and, if applicable, size.

In an embodiment, the artificial neural network of the shape estimator is an encoder-decoder artificial neural network comprising an encoder arranged for dimensionality reduction of the transformed partial-surface point cloud and a decoder for estimating the shape parameters.

In an embodiment, the received medical imaging data comprises a partial-surface point cloud of the organ originating from ultrasound data or magnetic resonance imaging data or fluoroscopy data.

It is also disclosed a method for obtaining a full-surface estimate of an organ, to estimate pose, size and shape of the organ from received medical imaging data comprising a partial-surface point cloud of the organ, the method comprising the use of an electronic data processor adapted to perform said full-surface estimate, and the method comprising:

estimating the pose and size of the received partial-surface point cloud and converting the received partial-surface point cloud to a partial-surface point cloud which is canonical in pose and size, by:

using an artificial neural network to estimate a rotation matrix, a translation vector and a scale factor of the received partial-surface point cloud;

using a similarity spatial transformer to output a similarity transformation of the partial-surface point cloud by translating by the estimated translation vector, rotating by the estimated rotation matrix, and scaling by the estimated scale factor;

estimating the shape of the transformed partial-surface point cloud using a predetermined statistical shape model of the organ defined by shape parameters, by:
using an artificial neural network to estimate, from the transformed partial-surface point cloud, said shape parameters modelled from the statistical shape model as shape reconstruction parameters.

It is further disclosed a method for iteratively estimating the pose and size of the received partial-surface point cloud for converting the received partial-surface point cloud to a partial-surface point cloud which is canonical in pose and size, comprising:

using said artificial neural network to estimate an incremental rotation matrix, an incremental translation vector and an incremental scale factor of an updated partial-surface point cloud from an iteratively updated partial-surface point cloud initialized with the received partial-surface point cloud;

updating an updatable pose estimate storage with a currently stored pose estimate comprising the estimated rotation matrix, translation vector and scale factor with the estimated incremental rotation matrix, incremental translation vector and incremental scale factor;

using said similarity spatial transformer to output a similarity transformation of the iteratively updated partial-surface point cloud by translating by the estimated incremental translation vector, rotating by the estimated incremental rotation matrix and scaling by the estimated incremental scale factor, and output the iteratively updated partial-surface point cloud.

It is further disclosed a method for obtaining a point cloud full-surface estimate of an organ, further comprising: outputting the point cloud full-surface estimate of the organ, by:

sampling full-surface points from the shape model of the organ parametrized with the shape reconstruction parameters;

using a similarity spatial transformer to output a similarity transformation of the sampled full-surface points by inverse rotating by the estimated rotation matrix, scaling by the multiplicative inverse of the estimated scale factor and translating by the negative of the estimated translation vector.

It is further disclosed a method for obtaining a full-surface estimate of an organ, to estimate pose, size and shape of the organ from received medical imaging data comprising a partial-surface point cloud of the organ, the method comprising the use of an electronic data processor adapted to perform said full-surface estimate, and the method comprising:

estimating the pose of the received partial-surface point cloud and converting the received partial-surface point cloud to a partial-surface point cloud which is canonical in pose, by:

using an artificial neural network to estimate a rotation matrix and a translation vector of the received partial-surface point cloud;

using a rigid spatial transformer to output a rigid transformation of the partial-surface point cloud by translating by the estimated translation vector and rotating by the estimated rotation matrix;

estimating the shape of the transformed partial-surface point cloud using a predetermined statistical shape model of the organ defined by shape parameters, the model embedding a scale component, by:
using an artificial neural network to estimate, from the transformed partial-surface point cloud, said shape parameters modelled from the statistical shape model as shape reconstruction parameters, including a scaling component.

It is further disclosed a method for iteratively estimating the pose and size of the received partial-surface point cloud for converting the received partial-surface point cloud to a partial-surface point cloud which is canonical in pose, comprising:

using said artificial neural network, to estimate an incremental rotation matrix and an incremental translation vector of an updated partial-surface point cloud from an
iteratively updated partial-surface point cloud initialized with the received partial-surface point cloud;
updating an updatable pose estimate storage with a currently stored pose estimate comprising the estimated rotation matrix and translation vector with the estimated incremental rotation matrix and incremental translation vector;
using said rigid spatial transformer, to do a rigid transformation of the iteratively updated partial-surface point cloud by translating by the estimated incremental translation vector and rotating by the estimated incremental rotation matrix, and output the iteratively updated partial-surface point cloud.

It is further disclosed a method for obtaining a point cloud full-surface estimate of an organ, further comprising: outputting the point cloud full-surface estimate of the organ, by:

sampling full-surface points from the shape model of the organ parametrized with the shape reconstruction parameters;
using a rigid spatial transformer to output a rigid transformation of the sampled full-surface points by inverse rotating by the estimated rotation matrix and translating by the negative of the estimated translation vector.

It is further disclosed a method further comprising estimating a sparsely defined displacement field allowing the non-rigid deformation of the reconstructed surface, by carrying out the steps of:

mapping the concatenation between shape parameters modelled from the statistical shape model and a dimensionally-reduced representation of the transformed partial-surface point cloud into a three-dimensional sparse displacement vector field;
interpolating a per-point displacement vector for the sampled full-surface points from the vector field;
non-rigidly deforming the sampled full-surface points using the interpolated per-point displacement vectors.

It is also disclosed computer program instructions for implementing a device for obtaining a point cloud full-surface estimate of an organ, configured to estimate pose, size and shape of the organ from received medical imaging data comprising a partial-surface point cloud of the organ, which when executed by a processor, cause the processor to carry out the any of the disclosed methods.

It is also disclosed a non-transitory computer-readable medium comprising the computer program instructions to carry out any of the disclosed methods.

## BRIEF DESCRIPTION OF THE DRAWINGS

The following figures provide preferred embodiments for illustrating the disclosure and should not be seen as limiting the scope of invention.

**Figure 1:** Schematic representation of a workflow of the present invention in a clinical scenario.

**Figure 2:** Illustrative representation of an embodiment of inputs and outputs of the disclosed deep surface reconstruction.

**Figure 3:** Schematic representation of an embodiment of major parts of the disclosed deep surface reconstruction method and device.

**Figure 4:** Schematic representation of an embodiment of a workflow for the creation of an object's statistical shape model.

**Figure 5:** Schematic representation of an embodiment of a general overview of the disclosed multi-task deep learning architecture.

**Figure 6:** Schematic representation of an embodiment of a kidney reconstruction using the present invention.

**Figure 7:** Schematic representation of an embodiment of a bladder reconstruction using the present invention.

**Figure 8:** Illustrative representation of an embodiment of an example heart ventricles reconstruction using the present invention.

**Figure 9:** Graphical representation of a reconstruction performance of an embodiment of the present disclosure.

**Figure 10:** Graphical representation of a relationship between input coverage and reconstruction performance of an embodiment.

**Figure 11:** Graphical representation of an influence of the number of iterations of the pose estimator module on the system's performance of an embodiment.

**Figure 12:** Graphical representation of a reconstruction performance for multi-loss or single loss (reconstruction) training of an embodiment.

**Figure 13:** Graphical representation of a reconstruction performance of an embodiment when using scale-variant vs. scale-invariant statistical shape models (SSMs).

**Figure 14:** Graphical representation of a performance analysis of an embodiment in (in silico) surface-based multimodal registration for the kidney experiment.

**Figure 15:** Graphical representation of a performance analysis of an embodiment in (in silico) surface-based multimodal registration for the bladder experiment.

**Figure 16:** Graphical representation of a performance analysis of an embodiment of the disclosure comparing ground truth shape with the reconstructed shape, where the input partial point cloud is also represented.

## DETAILED DESCRIPTION

As discussed, the present disclosure relates to a device and method for obtaining a full-surface estimate of an organ from a received partial anatomical point cloud, namely an artificial intelligent system for surface reconstruction from partial point set data. In particular, the disclosure relates to a system for surface reconstruction from partial point set data using a deep learning (DL) architecture and statistical shape models (SSMs).

The attached figures are relevant for illustrating the overall disclosure and also for illustrating particular embodiments of the disclosure.

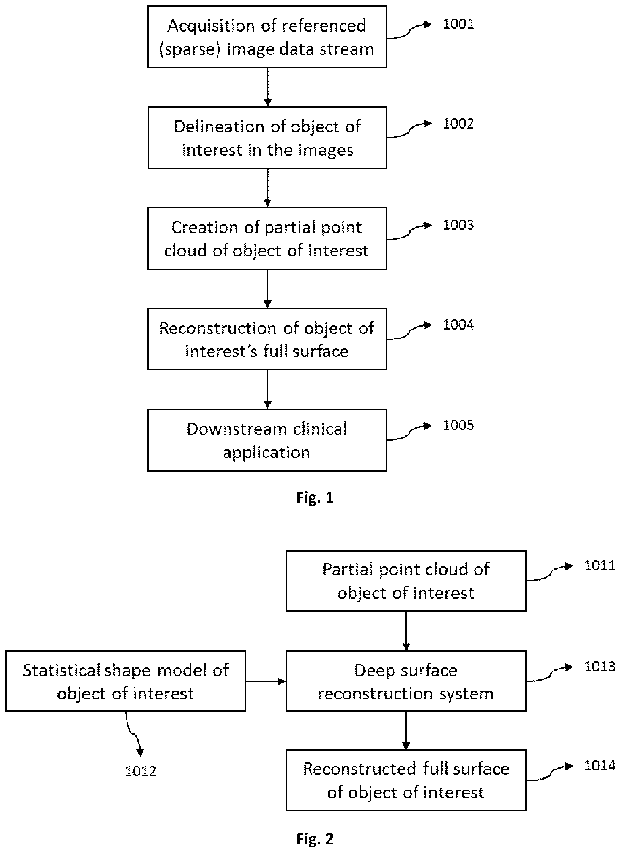

**Figure 1** illustrates a workflow of the present disclosure in a clinical scenario. From a set of (sparse) images of the object of interest acquired using a spatially referenced imaging system **1001** and subsequent delineation of that object **1002,** a partial representation of the subject's object of interest is obtained **1003.** This point cloud serves as input to the reconstruction system that estimates the object's shape and pose and reconstructs its full surface **1004.** These outputs can then be used in a downstream clinical application **1005.**

The following pertains to clinical workflow. The person is subjected to the acquisition of a set of images of the object of interest (e.g., an organ or other anatomical structure) using a medical imaging modality (ultrasound [US], computed tomography [CT], magnetic resonance [MR], etc.) **1001.** The acquired images must be spatially referenced to each other, either using the reference system embedded in the imaging system (e.g., in CT or MR, provided for example in the image orientation and image position tags present in the DICOM format) or using an external reference system (e.g., an optical or electromagnetic tracking system coupled to the imaging system, such as in the case of an US probe).

The object of interest is delineated from each image in which it is visible, by means of a computer-assisted procedure (either manually, semi- or fully automatically) **1002.**

From the delineated contours and using the respective spatial position and orientation of each image, a three-dimensional point cloud is created **1003,** representing the (partial) imaged surface of the object of interest.

From this partial representation of the subject's object of interest, its full surface is reconstructed by estimating the object's shape and pose (position, orientation and/or scale) **1004.**

The object's full surface, shape and/or pose can then be used in downstream clinical applications **1005.**

**Figure 2** illustrates inputs and outputs of the disclosed deep surface reconstruction system. From a point cloud representing the partial acquisition of a subject's object of interest **1011** and a statistical shape model of that object **1012,** the disclosed system **1013** simultaneously predicts the pose and the shape of the subject's object of interest, allowing to reconstruct its full surface **1014.**

The following pertains to the deep surface reconstruction (DSR) inputs and outputs. From a point cloud representing the partial acquisition of a subject's object of interest **1011** and a statistical shape model (a geometric, compact representation of the average shape of the object of interest plus its principal variations across a given population) **1012,** an artificial intelligent system **1013** simultaneously predicts the pose and the shape of the subject's object of interest, allowing to reconstruct its full surface **1014.**

Potential applications of this disclosure include among others:

Anatomical surface reconstruction module for image-guided (surgical) navigation framework, being the system used to determine the object's full surface prior to overlaying it on top of the real-time image stream;

Shape and pose estimation module to assist surface-based multimodal registration in image fusion/navigation frameworks and/or augmented reality environments.

Surface reconstruction software for anatomical/morphology assessment (diagnostics).

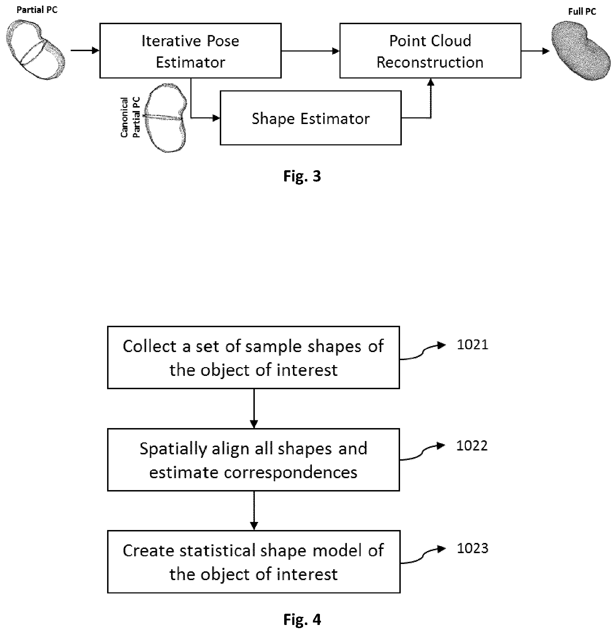

**Figure 3** illustrates modules of the disclosed deep surface reconstruction system.

In an embodiment, the following pertains to DSR modules. The DSR system consists in a multi-task deep learning architecture, comprising three modules:

an iterative pose estimator module that predicts the pose of the input partial point cloud, allowing to transform it into a canonical pose;

a shape estimator module that predicts the (unknown) shape of the subject's object of interest from its canonically-aligned partial point cloud only, by modeling it using a (known) statistical shape model of the object of interest (which is embedded in the architecture and act as shape prior);

a point cloud reconstruction module that reconstructs the object's (oriented) full surface from the predicted pose and shape.

Together, these modules allow the system to cope with the reconstruction of an object's full surface from a partial point cloud only, without *a priori* knowledge of that object's specific shape or of its pose.

Besides its use in cases in which the shape to be reconstructed is unknown, the system may also be used for pose prediction and/or shape "refinement" when the shape to be extracted is known or a good approximation of it exists (e.g., its full surface has been previously imaged, delineated and modelled using the same or other imaging modality, namely in a previous clinical routine exam or during preoperative planning in the case of a surgical procedure). A similar argument can be made when the organ pose is known and only shape must be estimated. This can be achieved by, for example, initializing the pose parameters from the known pose values and/or by defining a regularization term in the loss that constrains the shape parameters, thus improving reconstruction accuracy and/or training speed.

Interestingly, its learning-based approach allows to leverage a large collection of partial/complete point set pairs to ultimately learn how to cope with low object coverage situations (<50% of the object's full surface) with a high accuracy. In addition, the system's fast inference time permits a high-computational throughput, enabling its use under (near) real-time scenarios (e.g., during surgeries).

**Figure 4** illustrates a workflow for the creation of an object's statistical shape model according to an embodiment.

The following pertains to the SSM. To construct a representative SSM of the object of interest, a large set of sample shapes must be gathered (from the general population or a specific public of interest) **1021.** These sample shapes may be represented by, for example, point sets, curves, surfaces, orvolumes, being all later converted to a point set representation of the object's surface. The process of creating the SSM involves the alignment of all sample shapes **1022,** followed by the construction of a mean shape and its principal modes of variation **1023.**

Several strategies may be used to align the sample shapes and create the correspondences between them, from manual procedures to fully automatic algorithms [Gower1975, BeslMcKay1992, MyronenkoSong2010, Rasoulian2012, Ravikumar2018].

Let $X_n$ represent a sample shape (given as a 3D point cloud, for example represented as XYZ coordinates or another 3D representation) after alignment and correspondence estimation, the average shape, $\overline{X}$, and the covariance matrix, $S$, of the sample set (with $N$ total samples) are thus given, respectively, by equations (1) and (2).

$$\overline{X} = \frac{1}{N} \sum_{n=1}^{N} X_n \tag{1}$$

$$S = \frac{1}{N-1} \sum_{n=1}^{N} (X_n - \overline{X})(X_n - \overline{X})^T \tag{2}$$

By applying Principal Component Analysis on the data, the shape variability seen in the sample set can be captured [Cootes1995]. Using Singular Value Decomposition, one can compute the eigenvectors, $\phi_i$, and corresponding

**EP 4 715 738 A1**

eigenvalues, $\lambda_i$, of **S**. Since a large portion of the computed eigenvectors and associated eigenvalues are residual terms [Cootes1995], only a portion of these are retained, $K_{shape}$. For example, this value can be selected so that the constructed SSM represents a given percentage of the total variance exhibited in the sample set. The obtained SSM is thus represented by $\{\overline{X}, \Phi, \lambda\}$, where $\overline{X}$ is the average shape and $\Phi$ contains the $K_{shape}$ eigenvectors corresponding to the $K_{shape}$ largest eigenvalues retained, $\lambda$.

Given this SSM, a sample surface of the object of interest can be approximated by

$$X \approx \overline{X} + \Phi(\mathbf{b} \cdot \lambda) \qquad (3)$$

where **b** is a $K_{shape}$-dimensional vector (henceforth named shape vector or shape parameters) that best describes the sample's object shape coefficients in the SSM's shape space.

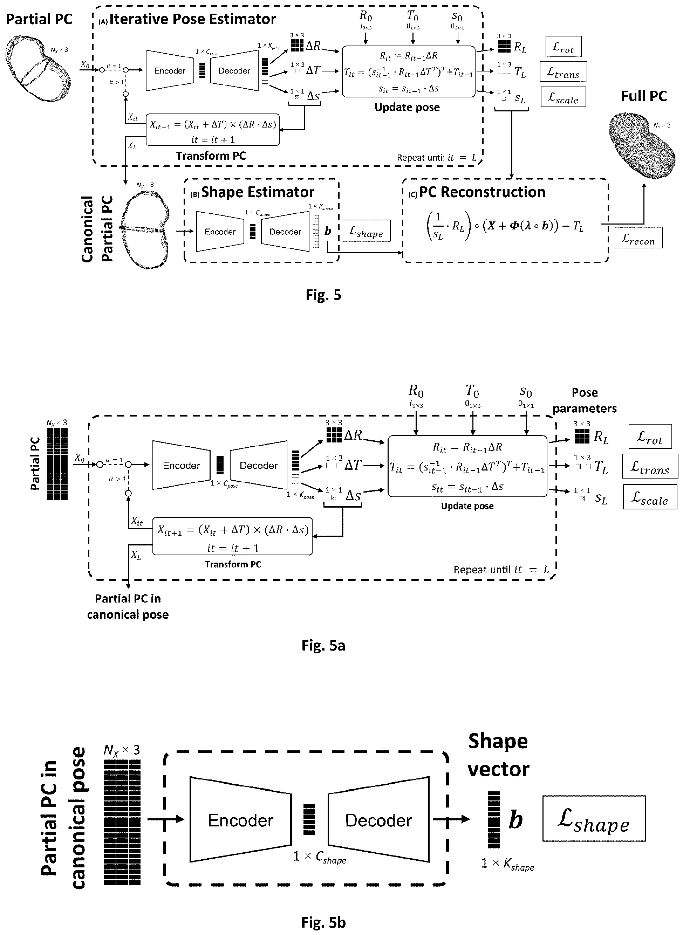

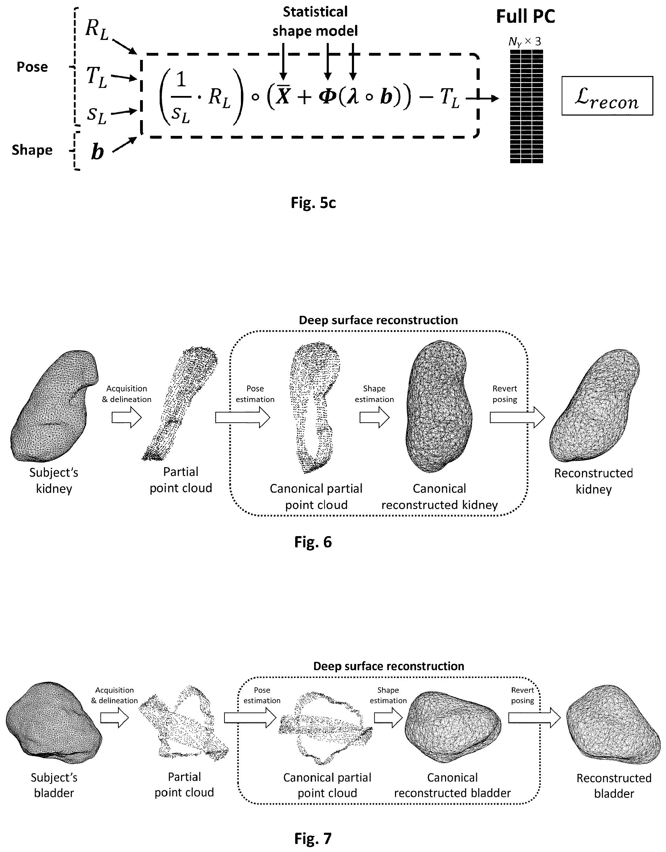

**Figure 5** illustrates a general overview of the architecture of the disclosed multi-task deep learning system. **Figure 5a** illustrates the iterative pose estimator module. **Figure 5b** illustrates the shape estimator module. **Figure 5c** illustrates the point cloud reconstruction module.

The following pertains to DSR full architecture and overview.

The architecture's main principle is to leverage the *a priori* information embedded in a statistical shape model of the object of interest to reconstruct a coherent and complete surface of a subject's object from an initial partial representation only ($P_{partial}$, given as an $N_X \times 3$ matrix, where each row represents, for example, the XYZ coordinates of a point or another 3D representation). Given equation (3), the full surface of a subject's object can be approximated if its corresponding shape vector is known. Hereto, one proposes to estimate it by means of a neural network architecture. Notwithstanding, the direct estimation of the shape vector from the input partial point cloud is hampered by the fact that the point cloud representation (i.e. the points' 3D coordinates) is not invariant to the object's pose. Therefore, the input point cloud must first be brought to a canonical pose. Since the pose of the input partial point cloud is unknown in most clinical scenarios (because the subject's positioning with respect to the reference system and/or the object's pose within the subject's body are unknown), one must also estimate the object's pose. Again, one proposes to estimate the pose parameters by means of a neural network architecture. From both pose and shape parameters, one may reconstruct the object's full surface, $P_{full}$ (given as an $N_Y \times 3$ matrix, where each row represents, for example, the XYZ coordinates of a point or another 3D representation, said representation being the representation used during SSM construction), using equation (4).

$$P_{full} = \left(s_L^{-1} \cdot R_L\right) \times \left(\overline{X} + \Phi(\lambda \cdot b)\right) - T_L \qquad (4)$$

where $R_L$, $T_L$ and $s_L$ are the estimated pose parameters (rotation matrix, translation vector and scale factor, respectively) and **b** the estimated shape vector. Note that the scale parameter can be omitted either if the scale variability is negligible for the object of interest or if such variation is accounted for in the constructed SSM (as one or more eigenvectors). However, the same reasoning does not hold for the translational component given that the network must deal with a partial representation of the input point cloud. Depending on the imaged portion, the resulting point cloud may thus be off centered with respect to the canonical pose's origin. Of note, all input point clouds must preferably be centered using their respective centers of mass and divided by a constant scalar (equal to all samples) so that all points lie inside a unit sphere, being these operations reversed after reconstruction.

In an embodiment, **Figure 5a** illustrates an Iterative Pose Estimator. This network module aims to predict the pose parameters (representing a similarity transform) from the input partial point cloud ($P_{partial}$), allowing to align it with a canonical pose. The disclosure employs in an embodiment an encoder-decoder network architecture in an iterative scheme to progressively transform the input point set to the canonical pose, while also concatenating the successive pose estimates into the object's final pose parameters. This strategy builds upon a scheme from [Yuan2019]. Specifically, in the first iteration, the network consumes the input point cloud and estimates an initial set of pose parameters, which are used to transform the point cloud closer to its canonical pose. In subsequent iterations, the encoder-decoder network consumes the transformed version of the partial point cloud and estimates any residual transformation left. New estimates are used to transform once more the point cloud, while also being composed to the pose parameters resulting from previous iterations (see **Fig. 5** and equations therein). The encoder-decoder network's trainable parameters are shared across iterations. By modeling the alignment strategy as an iterative procedure, one can reduce the inference error that usually results from a single-step estimation approach.

The encoder is responsible for learning how to map the unordered set of input points into a low-dimensional representation ($C_{pose}$-dimensional vector), which is then used by the decoder to estimate the pose parameters. Any network architecture that respects the permutation invariance of the points in the input may be used, with particular emphasis for those that are able to encode local-to-global information of the input point cloud to better capture the interaction among points. Example architectures include PointNet [Qi2017a], PointNet++ [Qi2017b] or one of their

9

variants, DGCNN [Wang2019c], among others.

The number of pose parameters ($K_{pose}$) depends on the specific representation used for the rotation, translation, and scale components of the object's pose. In the present embodiment of the invention, $C_{pose}$ equals 10 (9 if scale is omitted or embedded in the SSM, as abovementioned). The translation vector is given by 3 parameters and allows to estimate the misalignment between the input partial point cloud's center of mass and the origin of the canonical pose. The scale factor is given by 1 parameter and accounts for the variability in overall size of the object of interest. The rotational component is given by 6 parameters, as proposed in [Zhou2019]. This 6D representation is continuous in the 3D Euclidean space, mitigating the issues introduced by other representations (such as Euler angles or quaternions) when training a neural network to predict an unconstrained rotation in the 3D space. The 6-dimensional vector can then be used to create an orthogonal $3 \times 3$ rotation matrix [Zhou2019]. Note that, although the network could be modified to directly estimate the 9 parameters of the rotation matrix, this solution would not provide an orthogonal matrix (an additional regularization scheme would be needed), while also increasing the number of total parameters to be estimated by the network. A similar limitation exists if one would directly estimate the 16 parameters of a homogeneous (e.g., similarity) matrix.

In an embodiment, **Figure 5b** illustrates a Shape Estimator. This network module aims to predict the shape vector ***b*** associated to the full surface of the input object from its canonically aligned partial representation only. An encoder-decoder architecture similar to the previous module is again employed, with the encoder first mapping the input point cloud to a $C_{shape}$-dimensional representation (equals 1024 in the present embodiment of the invention) and the decoder further estimating the $K_{shape}$-dimensional shape vector from it.

In an embodiment, optionally, the shape estimator may be modified to also simultaneously infer a sparsely defined displacement field that permits the non-rigid deformation of the reconstructed SSM-based surface to better fit the input partial point cloud. In this embodiment of the invention, a secondary decoder is introduced that maps the concatenated feature vector resulting from both $C_{shape}$- and $K_{shape}$-dimensional vectors into a three-dimensional sparse displacement vector field $\Gamma$ (i.e. a $V_x \times V_y \times V_z \times 3$ matrix, where $V_{\{x,y,z\}}$ represent the number of nodes in the sparse vector field along each dimension). By extending equation (3), the shape would in this case be described by:

$$X_{non-rigid} \approx \overline{X} + \Phi(\lambda \cdot b) + \Gamma\big(\overline{X} + \Phi(\lambda \cdot b)\big) \qquad (5)$$

where $\Gamma(\mathbf{X})$ represents a function that interpolates a per-point displacement vector for the SSM-derived point set ***X*** from vector field $\Gamma$.

In an embodiment, Figure 5c illustrates a point cloud (PC) Reconstructor. Upon estimating both pose and shape parameters ($K_{pose}$ and $K_{shape}$, respectively), one may now reconstruct the object's full surface using equation (4) (or an extended version based on equation (5) if using the non-rigid shape estimator). Note, however, that although the network predicts the transformation needed to align the input point cloud with the canonical pose, at this stage one requires the inverse transformation to reconstruct an oriented full surface (i.e. with the same pose of the input point cloud). One solution would be to directly estimate the inverse pose components also, while regularizing the multiplication of forward and inverse transforms to approximate an identity matrix. However, this solution would not ensure the exact positioning of the output surface, while significantly increasing the system's overall complexity. Interestingly, given the fact that the iterative pose estimator predicts independent parameters for the rotation, translation and, optionally, scale components, and the fact that the composition of pose estimates (and successive point cloud transformations) are made using matrix post-multiplication/addition (see Fig. 5a and Fig. 5c), one proposes to implicitly describe the repositioning of the reconstructed surface using matrix pre-multiplication/subtraction operations (see equation 4). Besides reducing the system's complexity and avoiding the need for regularization schemes, the disclosure improves the final positioning of the (oriented) full surface with respect to the original coordinate system of the input partial representation (as it perfectly reverts the transformation made by the pose estimator module), while also allowing the end-to-end training of the whole system.

The following pertains to DSR system's training. The DSR architecture is trained end-to-end in a supervised fashion. To this end, a dataset containing pairs of partial and complete point clouds ($P_{partial}$, $P_{full}$) is required. Since all samples must contain a fixed number of input and output points ($N_X$ and $N_Y$, respectively), each point cloud must be under- or over-sampled during training (and inference also). Distinct loss functions may be used to measure the reconstruction loss, $\mathcal{L}_{recon}$, and guide the model's supervised learning, with distinct (dis)advantages. From one hand, permutation invariant functions, like the Chamfer Distance or the Earth Mover's Distance, may be used. Alternatively, and to better improve network's convergence, a per-point distance function may be employed (such as mean absolute distance [MAD], mean squared average distance, weighted variants, etc.). The latter version requires the complete point cloud to be fitted to the SSM of the object of interest (using the same alignment and correspondence assignment strategy used to construct it), optionally non-rigidly deforming the resulting surface to decrease approximation errors. This latter strategy also paves the way for a multi-loss training scheme, further speeding the model's convergence. Hereto, the pose and shape parameters resulting from the SSM fitting procedure applied to the complete point cloud are used to further condition the model's learning. In this sense, the total loss is given by:

$$\mathcal{L} = \lambda_{recon}\mathcal{L}_{recon} + \lambda_{rot}\mathcal{L}_{rot} + \lambda_{trans}\mathcal{L}_{trans} + \lambda_{scale}\mathcal{L}_{scale} + \lambda_{shape}\mathcal{L}_{shape} \qquad (6)$$

where $\mathcal{L}_{rot}$ measures the error of the predicted rotation (e.g., geodesic distance, Huber loss, mean squared error [MSE], etc.), $\mathcal{L}_{trans}$ the error of the predicted translation (e.g., MAD or MSE), $\mathcal{L}_{scale}$ the error of the predicted scale factor (e.g., MSE), $\mathcal{L}_{shape}$ the error of the predicted shape vector (e.g., MSE or eigenvalue-weighted variant), and $\lambda_i$ are the hyperparameters balancing the different loss terms.

In an embodiment, to further improve the network's training, one may also take advantage of the constructed SSM to create an infinite number of synthetic point cloud pairs. In short, during synthesis, one randomly samples a shape vector (from a normal distribution per shape coefficient) and creates the associated point cloud using equation (3). Optionally, to increase realism, the obtained point cloud may be non-rigidly deformed (e.g., using a sparse displacement vector field defined over the canonical coordinate system), and the shape vector re-estimated from it using the SSM. Then, a simulation procedure may be used to recreate the acquisition of the partial point cloud. Depending on the downstream clinical application, this simulation may account for distinct imaging proprieties (e.g., imaging modes/views, coverage, resolution, etc.), image tracking proprieties (e.g., mimicking the reference system's noise model), delineation strategies (such as mimicking intra- and interobserver variability, outliers' presence, etc.) or object's positioning (randomly sampling the pose parameters, $T(\mathrm{K}_{pose}) \in Sim(3)$, to introduce pose variability). This simulator may be used offline or on-the-fly during training, and effectively replace other point set-based augmentation strategies.

**Figures 6, 7** and **8** illustrate the disclosure for three example objects of interest, namely kidney, bladder, and heart ventricles.

**Figure 6** illustrates an example kidney reconstruction using the present invention. A partial representation of a subject's kidney is obtained upon image acquisition and subsequent delineation of the organ in every imaged plane. In this example, a single sweep along the longitudinal plane of the kidney was performed with an ultrasound probe. The obtained point cloud serves as input to the reconstruction system. The system first estimates the input's pose, transforming it to a canonical pose. From this canonically oriented partial point cloud, the system infers the shape coefficients that model the subject's specific kidney shape. Using the associated kidney statistical shape model, the estimated shape vector is used to reconstruct the full kidney surface (in a canonical pose), which is subsequently transformed back to the input's space using the inverse of the inferred pose. The system outputs the obtained (oriented) full kidney surface.

**Figure 7** illustrates an example bladder reconstruction using the present invention. A partial representation of a subject's bladder is obtained upon image acquisition and subsequent delineation of the organ in every image. In this example, a single sweep of an ultrasound probe is performed using a biplane acquisition mode. The obtained point cloud serves as input to the reconstruction system. The system first estimates the input's pose, transforming it to a canonical pose. From this canonically oriented partial point cloud, the system infers the shape coefficients that model the subject's specific bladder shape. Using the associated bladder statistical shape model, the estimated shape vector is used to reconstruct the full bladder surface (in a canonical pose), which is subsequently transformed back to the input's space using the inverse of the inferred pose. The system outputs the obtained (oriented) full bladder surface.

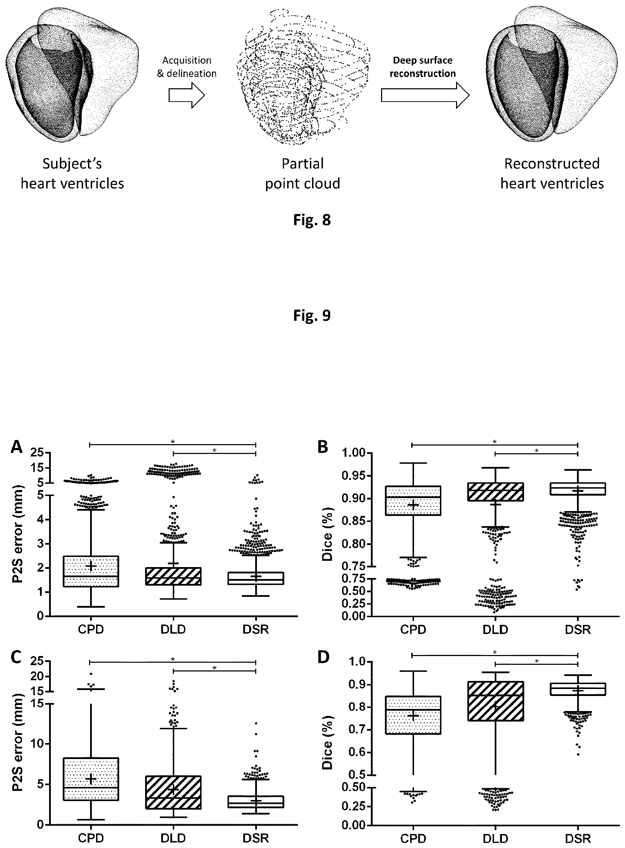

**Figure 8** illustrates an example heart ventricles reconstruction using the present invention. A partial representation of a subject's left ventricle's myocardium and right ventricle's endocardial wall is obtained upon image acquisition and subsequent delineation of the ventricles in every imaged plane. In this example, the acquisition accounted for both short-axis and long-axis views (with inter-view and inter-slice misalignments) from magnetic resonance imaging. The obtained point cloud serves as input to the reconstruction system, which outputs the full (closed) surface of both left ventricle's myocardium and right ventricle's endocardial wall.

The following pertains to experiments and results. The disclosure was evaluated in the reconstruction of two distinct organs (kidney and bladder), each considering two potential application goals (accuracy of shape reconstruction for anatomy assessment and/or visualization and usefulness for surface-based multimodality fusion).

The following pertains to kidney reconstruction and SSM and dataset preparation. Three-dimensional surfaces of both left and right kidneys were extracted from thirty-eight CT scans using the 3D Slicer software (version 4.10) [Fedorov2012], in a total of 76 3D kidney surfaces. Specifically, for each kidney, the procedure consisted on manually delineating the kidney boundary in multiple 2D contours, followed by 3D interpolation. If deemed necessary, the obtained 3D surface was refined using the draw/erase tools and/or smoothed with a 3D median filter. Then, to facilitate the alignment step during SSM construction, all surfaces were manually rotated to coarsely orient the kidney's upper/lower poles with the superior/inferior axis, and the renal pelvis exit with the positive side of the right-left axis.

Of these surfaces, sixty (from 30 CT scans) were used to create the kidney SSM using the group-wise multi-resolution rigid registration strategy proposed in Ravikumar et al. [Ravikumar2018]. Specifically, the number of mixture components (i.e. the number of points defining the mean shape) was set to 2048 (i.e. $N_Y$), the number of resolution levels were set to 3, and the number of Expectation-Maximization (EM) iterations were set to 150. The resulting aligned surfaces were then used to create the SSM as previously described, with the number of retained eigenvectors chosen to describe 95% of the total variance exhibited in the sample set ($K_{shape}$ = 21).

To create a diverse set of training partial/complete point cloud pairs, the aforementioned synthetic generation strategy was employed. Each complete point cloud is created by randomly sampling the SSM's shape space and non-rigidly deforming the sampled shape using a randomly generated sparse displacement vector field (whose nodes are equally distributed over the 3D space, 20 mm apart from each other, and whose displacement is sampled from $\mathcal{N}$ (0, 1.5 $mm$)). If necessary for shape supervision ($\lambda_{scale} \neq 0$), the corresponding ground truth shape vector can be re-estimated from the resulting surface. The paired partial point cloud is created by simulating the US acquisition and delineation process. Inspired by the strategy described in Fonseca et al. [GomesFonseca2019], we randomly position the (virtual) US probe mimicking its possible positioning in an abdominal scan, and sweep it in multiple directions (i.e., roll, pitch and yaw). The number of sweeps (up to 2), their coverage (up to 30º) and the number of imaging planes (from 20 to 100) are all randomly defined. For each probe's position, one intersects the imaging planes (either longitudinal, transverse or both) with the complete surface and obtain the respective 2D contours. To account for segmentation errors and intra-/interobserver variability, each point was randomly moved within the imaging plane by sampling the displacement amount for each coordinate from $\mathcal{N}$ (0, 1 $mm$). Since in clinical practice one must couple the US probe to a tracking system to spatially reference all images, the tracking system's noise model was also simulated by randomly moving each 2D contour by an amount sampled from $\mathcal{N}$ (0, 0.5 $mm$) in each 3D coordinate [GomesFonseca2020]. The partial point cloud is then obtained by merging all 2D contours. Using this strategy, one simulated 13000 different complete kidney shapes and respective partial point clouds. These pairs were divided into training (12000) and validation (1000) sets, with the latter being used for training progression control and hyperparameter tuning only.

The test set was created from the sixteen surfaces not used in the SSM construction. However, instead of virtually simulating the acquisition process, one used real probe movement recordings from acquisitions in kidney phantoms [Fonseca2019]. These recordings were used to intersect the test kidney surfaces, with the segmentation and tracking system's noise being again accounted for to increase realism. To account for pose variability, each pair was randomly rotated in yaw, pitch and roll, sampling from $\mathcal{U}$ (-45º, 45º) for each. In total, the test set consisted in 2000 pairs of partial/complete point clouds.

The following pertains to implementation details. The number of points of the partial point cloud, $N_X$, was set to 2048. The number of iterations on the pose estimator was set to 5. Its encoder was implemented based on PCN [Yuan2018], representing an extended version of PointNet [Qi2017] and inheriting its proprieties of invariance to permutation and tolerance to noise. It consists of a stack of two PointNet layers. The first transforms the input matrix into a point feature vector by means of a shared multilayer perceptron (MLP) with two layers (of 64 and 128 nodes), interleaved by a batch normalization (BN) layer and a ReLU activation. Then, a point-wise max-pooling layer is applied to obtain a 128-dimensional global feature vector. The second transforms the concatenated matrix of row-wise and global feature vectors into a $C_{pose}$-dimensional point feature vector by means of an additional shared MLP with two layers (of 256 and $C_{pose}$ nodes, interleaved by BN and ReLU). Finally, a second max-pooling layer aggregates this point feature vector into the final $C_{pose}$-dimensional representation ($C_{pose}$ equals 1024 in the present experiment). In its turn, the decoder employs a shared MLP with four layers (1024, 512, 256 and $K_{pose}$, interleaved by BN and ReLU). Since a rigid transform was used in the alignment step while creating the SSM, the resulting SSM implicitly accounts for the scale variability among kidney shapes (described primarily by the first eigenvector), which means the scale parameter may be omitted from the pose estimator module. Therefore, $K_{pose}$ was set to 9. Of note, during training, although the gradients are propagated through the pose composition ("Update pose" block in **Fig. 5a**), these are not propagated through the point cloud transformations ("Transform PC" block in **Fig. 5a**).

Moreover, the last layer of the decoder was initialized to $[1000\ 1000\ 0]^T$, which following the pose definition used corresponds to an identity rotation matrix and a zeroed translation vector. The same encoder and decoder were used in the shape estimator module, but in this case the last layer was randomly initialized. $C_{shape}$ and $K_{shape}$ were set to 1024 and 21, respectively.

Mini-batch gradient descent was used (batch size of 32), and a multi-loss scheme was employed. Specifically, MAD was used for $\mathcal{L}_{recon}$ and $\mathcal{L}_{trans}$, while MSE was employed for $\mathcal{L}_{rot}$. An eigenvalue-weighted MSE (whose weights are given by $w(k) = \sqrt{\lambda_k} / \left( \lambda_1 \sum_i \left( \sqrt{\lambda_i} \right) \right)$ was used $\mathcal{L}_{shape}$ for. All losses' hyperparameters ($\lambda_i$) were set to 1. The Adam optimizer [Kingma2015] was used, with the initial learning rate set to $1 \times 10^{-3}$. This value is reduced to one third when no new loss minimum is found for 5 epochs. The training limit was set to 75 epochs, with early stopping set for 10 epochs without a new loss minimum.

During training, data augmentation was applied on-the-fly to introduce pose variability. This was achieved by randomly rotating the input/output points clouds in yaw, pitch and roll by sampling each from $\mathcal{U}$ (-45º, 45º). In addition, one must ensure that the point clouds are still centered in the partial point cloud's center of mass (see architecture's description), also updating the ground truth translation vector accordingly.

The following pertains to results. Upon training the disclosed model using the training/validation sets, one evaluated its reconstruction performance on the test set. In this sense, for each test sample, one computed two metrics: (1) the average point to surface (P2S) error between the reconstructed point cloud and the complete (ground truth) surface (the lower, the better); and (2) the Dice coefficient between them (from 0 to 1, with the latter meaning a perfect result). The results of the disclosed system (DSR) for the entire test set are illustrated in **Fig. 9A** and **B** (P2S and Dice score, respectively). For comparison purposes, the reconstruction results for two other strategies from the literature are also included, namely using the Coherent Point Drift (CPD) algorithm [MyronenkoSong2010] and the Dependent Landmark Drift (DLD) method [Hirose2018]. In both, the reconstruction is defined as a point set registration problem, but with distinct levels of prior knowledge. Overall, the disclosure outperformed the other approaches, with statistically significant differences in both metrics ($p<0.05$, in a one-way Friedman's test, with Dunn's multiple comparisons test).

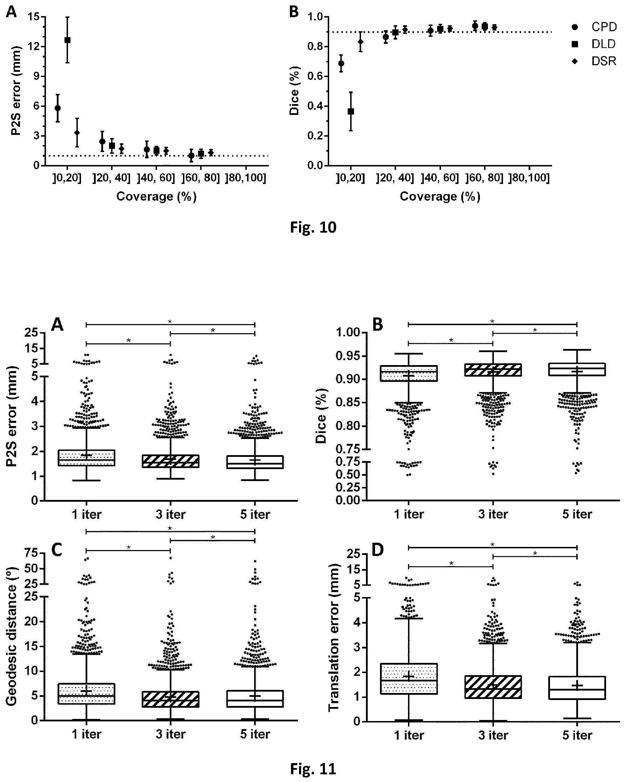

To better understand the advantages of the disclosed strategy, the test samples were divided based on the percentage of coverage of the complete point cloud by the partial one (defined as the percentage of points of the complete set whose distance to the nearest point in the partial set is lower than 3 mm). Five groups were considered. This analysis is summarized in **Fig. 10**. Lower percentages of coverage were associated with larger differences between approaches (P2S error and Dice coefficient in Fig. 10A and B, respectively), with the disclosed DSR method clearly outperforming the two state-of-the-art (CPD and DLD-based) methods.

Additional experiments were performed to understand the effect of certain algorithmic decisions on the disclosed model's performance. **Fig. 11** focuses on the influence of the number of iterations on the pose estimator module. Besides the P2S error and Dice coefficient (A and B, respectively), one also assessed the error in terms of predicted pose (measured by the geodesic distance and the Euclidean error for rotation and translation, respectively, as shown in Fig. 11C and D). All metrics demonstrate that an iterative estimation scheme leads to a superior performance ($p < 0.05$, in a one-way Friedman's test, with Dunn's multiple comparisons test), although the performance tends to plateau after a few iterations (with increasing training needs in terms of GPU memory).

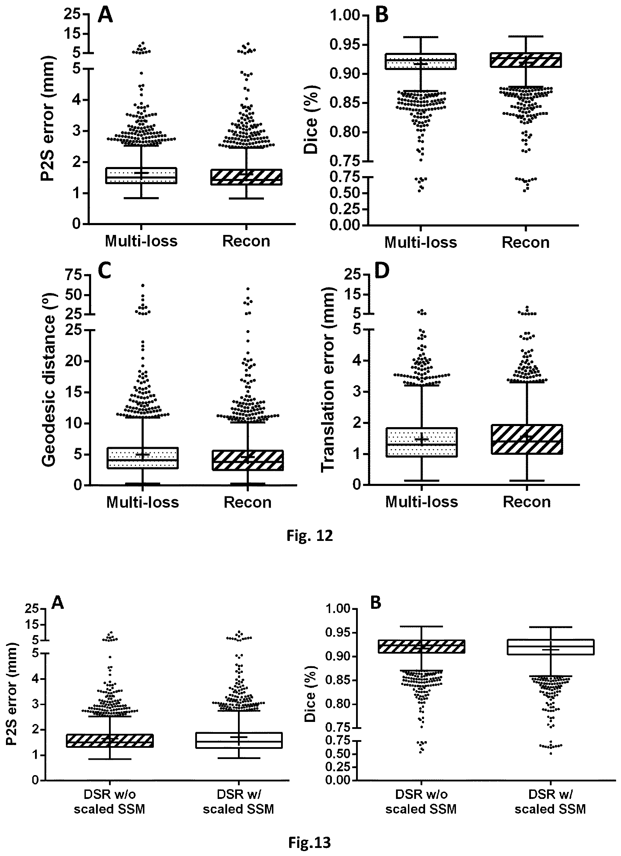

Similarly, we evaluated the difference between training with the reconstruction loss only ($\lambda_{recon} = 1$, $\lambda_{rot} = 0$, $\lambda_{trans} = 0$, $\lambda_{shape} = 0$), against the multi-loss scheme. **Fig. 12** summarizes the results for the four metrics (P2S distance error, Dice coefficient, geodesic distance and translation error in panels A to D, respectively), with no significant differences in a Wilcoxon matched-pairs signed rank test. Nevertheless, the single loss scheme showed slightly better average results for most metrics, which interestingly hints on the potential value of the network's end-to-end training and its ability to jointly estimate (and leverage) the object's pose and shape.

Finally, no major difference in model's performance was observed when using a non-scaled vs. scaled SSM (i.e. explicitly estimating or not the scale within the network, respectively), as observed in **Fig. 13** (further details about the scaled SSM variant in the bladder experiment). Of note, in a scale-variant SSM, the scale parameter may be omitted from the pose estimator module as the object's scale variability is accounted for within the SSM (as one or more of its eigenvectors, and hence implicitly introduced in the reconstruction by the shape estimator module). In opposition, a scale-invariant SSM disregards the object's overall size by scaling all training shapes during the alignment step, requiring the introduction of the scale factor in the pose estimator module.

Besides its immediate value for reconstruction purposes, it is also relevant to understand the added value of the disclosure for downstream clinical applications. One example is surface-based multimodal registration within image fusion frameworks (e.g. in surgery), whose goal is to determine the (rigid) transformation between modalities by registering surfaces (or point clouds) extracted from each [Fonseca2019]. To simulate it, for each test sample, we register the canonical complete point cloud (serving as the surface from one modality) to the randomly rotated partial point cloud (mimicking the surface extracted from the second modality) using CPD.

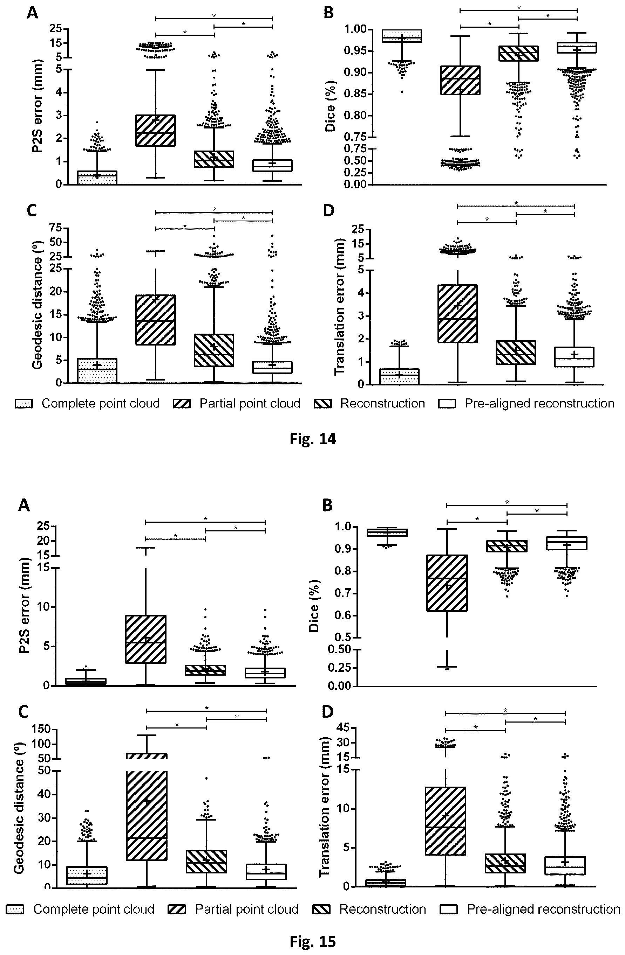

Then, we repeat the analysis but using the reconstructed point cloud as the second point set. Since DSR simultaneously outputs the full object surface and its pose (besides shape), we also assessed the potential benefit of using the estimated pose to pre-align the reconstruction result prior to running the CPD method. Finally, and to set a baseline, we also report on the registration error if the rotated complete point cloud would be used. The results are summarized in **Fig. 14** (P2S distance error, Dice coefficient, geodesic distance and translation error in panels A to D, respectively). It is clear the improvement on registration performance for all metrics when using the DSR-reconstructed surface over the direct use of partial representations of the object (as usually acquired in intraoperative scenarios), which fits well with the results previously reported by Fonseca et al. [Fonseca2019] in terms of accuracy for partial point sets vs. full ones. Interestingly, the improvement is even more pronounced when the estimated pose is used to pre-align the two sets. Note that the latter strategy may be used in clinical practice (e.g. pre- and intraoperative image fusion for surgical navigation) if the pose of the reference surface with respect to the canonical pose is known. One way of accomplishing it is by pre-processing the surface(s) from the reference modality with the same alignment strategy used for SSM construction.

The following pertains to bladder reconstruction and SSM and dataset preparation. Three-dimensional surfaces of the bladder were extracted from thirty-seven CT scans. Thirty were used to create the SSM and the training/validation set, while the other seven were left for the test set. The major differences with respect to the strategy used in the kidney experiment were: (1) a similarity variant of the group-wise multi-resolution registration method [Ravikumar2018] was employed to align all training shapes, which makes the constructed SSM scale-invariant and requires the estimation of the scale parameter in the pose estimator module; (2) given the lower number of surfaces available, the number of eigenvectors retained were chosen so as to keep 97.5% of the total variance exhibited in the training set ($K_{shape}$ = 20); and (3) the acquisition simulation parameters were modified to mimic the probe's positioning in a suprapubic ultrasound exam. The same number of partial/complete point cloud pairs were generated for training and validation (12000 and 1000, respectively), while the test set consisted in 1000 pairs only. As before, pose variability was introduced on-the-fly during training. Given that one expects a lower variability in pose for the bladder, one sampled the rotation angles from $\mathcal{U}$ (-30$\underline{o}$, 30$\underline{o}$).

The following pertains to implementation details in the bladder experiments. Again, the implemented model is similar to the one used for the kidney experiment. However, as mentioned above, the scale parameter is now dealt by the pose estimator module and, therefore, $K_{pose}$ was set to 10 and the last layer initialized to $[1\ 0\ 0\ 0\ 10000\ 1]^T$ (i.e. identity rotation matrix, zeroed translation vector and unit scale factor). Moreover, a single loss training scheme (only $\lambda_{recon} \neq 0$) was in this case employed.

The following pertains to results of the bladder experiment. The reconstruction performance of the disclosure, plus CPD and DLD, are presented in **Fig. 9C** and **D.** Our model outperforms the other strategies, once again showing a greater accuracy especially for lower coverage cases (data not shown). Similarly, one also observed the added value of the reconstruction step for surface-based registration (e.g. in intraoperative multimodality fusion), as depicted in **Fig. 15.**

**Figure 15** illustrates a performance analysis in (in silico) surface-based multimodal registration for the bladder experiment.

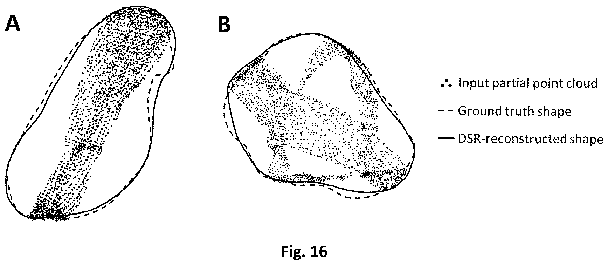

**Figure 16** illustrates two reconstructed shapes from partial point clouds used as inputs to the presently disclosed method and device, where the ground truth shape, which was partially sampled to provide said partial point clouds, is compared with the reconstructed shape according to the disclosure ('DSR').

CPD and DLD implementations are also described herewith. For comparison purposes, CPD, a robust point set registration algorithm [MyronenkoSong2010], was employed with the goal of fitting the mean shape of our kidney SSM to the input point cloud. Hereto, a two-step alignment strategy is used. First, the mean SSM shape is globally aligned to the input partial point cloud using a rigid variant of the CPD algorithm, therefore removing the larger pose-related mismatch between point clouds. Second, the aligned mean shape is then deformed towards the input point cloud using a nonrigid CPD variant. Note that the smoothing terms on the nonrigid variant allow the method to deform the average object (kidney or bladder in the experiments) shape towards the partial one in imaged regions while having lower influence on non-imaged portions, driving the method to always output object-like shapes. MATLAB's implementation of CPD was used, setting the outlier ratio to 10%, the maximum number of iterations to 25, the smoothing weight to 0.1 and the interaction sigma to 7.5.

In its turn, the DLD implementation made publicly available by the author [Hirose2018] was used. Hereto, the reconstruction is still described as a point set registration problem, but in which prior knowledge of object geometry is used to improve performance. This prior knowledge is modelled by an SSM of the object of interest, and therefore the entire transformation model used in the registration is defined as a combination of a similarity transform, motion coherence and the SSM. Our constructed SSMs were used. Since the method's performance depends on a set of hyperparameters, a small validation study was first performed. The final evaluation was obtained by executing the method with the following values: noise probability: $1 \times 10^{-4}$, regularization constant: $1 \times 10^{-4}$; number of points for Nystrom: 500; rigid pre-alignment: active; maximum number of EM loops: 1000.

The present disclosure can also comprise:

- A module to extract the partial point set used as input data (e.g. a segmentation algorithm able to automatically delineate the object of interest in the acquired images, which should be referenced to each other [either by the acquisition system itself or by means of an external referencing system like a motion tracking device);

- A statistical shape model (created from a large collection of complete surface models of the object) or a personalized model (extracted by means of a previous imaging scan to the subject under study) of the object to be reconstructed;

- Pairs of complete/partial point sets to be used for training the disclosed network in a supervised fashion. Alternatively, one may simulate the acquisition process, therefore only requiring the complete sets (e.g. from a statistical shape model).

- If focusing on image fusion/navigation, for optimal performance, the present disclosure may be used together with a traditional point set registration strategy. The former predicts the shape and uses the estimated pose to pre-align the object, with the latter being used to refine the alignment. Tests demonstrate the superior performance of this strategy.

In an embodiment, open-source deep learning frameworks can be used to implement the disclosure as disclosed.

Considering its use in image-guided surgical navigation frameworks, the following steps are thus also disclosed:

Gather a substantial amount of data from the object of interest to supervise the training of the model;
Model deployment (generating a final model with superior time performance and thus amenable for clinical use);
Embed the model in an ultrasound-guided surgical navigation framework (e.g. for percutaneous nephrolithotomy);
Experiment the system in a clinical environment (i.e. applied in point sets acquired by delineating a partial ultrasound acquisition of real patients; so far, we have tested on simulated partial point sets of kidney, bladder and heart's left ventricle, as well as for kidney reconstruction from partial ultrasound acquisitions of abdominal phantoms).

References

[BeslMcKay1992] P. J. Besl, N. D. McKay. Method for registration of 3-D shapes. In Sensor fusion IV: control paradigms and data structures, pp. 586-606, 1992.

[Cootes1995] T. F. Cootes, C. J. Taylor, D. H. Cooper, J. Graham. Active shape models-their training and application. Computer Vision and Image Understanding, vol. 61, pp. 38-59, 1995.

[GomesFonseca2019] J. Gomes-Fonseca, S. Queirós, P. Morais, A. C. M. Pinho, J. C. Fonseca, J. Correia-Pinto, E. Lima, J. Vilaça. Surface-based registration between CT and US for image-guided percutaneous renal access - A feasibility study. Medical Physics, vol. 46(3), pp. 1115-1126, 2019.

[GomesFonseca2020] J. Gomes-Fonseca, F. Veloso, S. Queirós, P. Morais, A. C. M. Pinho, J. C. Fonseca, J. Correia-Pinto, E. Lima, J. L. Vilaça. Technical Note: Assessment of electromagnetic tracking systems in a surgical environment using ultrasonography and ureteroscopy instruments for percutaneous renal access. Medical Physics, vol. 47(1), pp. 19-26, 2020.

[Gower1975] J. C. Gower. Generalized Procrustes Analysis. Psychometrika, vol. 40, pp. 33-51, 1975.

[Hirose2018] O. Hirose. Dependent landmark drift: robust point set registration with a Gaussian mixture model and a statistical shape model. arXiv preprint arXiv:1711.06588, 2018.

[Fedorov2012] A. Fedorov, R. Beichel, J. Kalpathy-Cramer., J. Finet, J-C. Fillion-Robin, S. Pujol, C. Bauer, D. Jennings, F.M. Fennessy, M. Sonka, J. Buattt, S.R. Aylward, J.V. Miller, S. Pieper, R. Kikinis. 3D Slicer as an Image Computing Platform for the Quantitative Imaging Network. Magnetic Resonance Imaging, vol. 30(9), pp. 1323-41, 2012.

[Kingma2015] D. P. Kingma, J. Ba. Adam: A method for stochastic optimization. arXiv preprint arXiv:1412.6980, 2014.

[MyronenkoSong2010] A. Myronenko, X. Song. Point set registration: Coherent point drift. IEEE Transactions on Pattern Analysis and Machine Intelligence, vol. 32, pp. 2262-2275, 2010.

[Qi2017a] C. R. Qi, H. Su, K. Mo, L. J. Guibas. Pointnet: Deep learning on point sets for 3d classification and segmentation. In Proceedings of the IEEE Conference on Computer Vision and Pattern Recognition (CVPR), pp. 652-660, 2017.

[Qi2017b] C. R. Qi, L. Yi, H. Su, L. J. Guibas. PointNet++: deep hierarchical feature learning on point sets in a metric space. In Proceedings of the 31st International Conference on Neural Information Processing Systems, pp. 5105-5114, 2017.

[Rasoulian2012] A. Rasoulian, R. Rohling, P. Abolmaesumi. Group-wise registration of point sets for statistical shape models. IEEE Transactions on Medical Imaging, vol. 31, pp. 2025-2034, 2012.

[Ravikumar] N. Ravikumar, A. Gooya, S. Çimen, A. F. Frangi, Z. A. Taylor. Group-wise similarity registration of point sets using Student's t-mixture model for statistical shape models. Medical Image Analysis, vol. 48, pp. 156-176, 2018.

[Wang2019] Y. Wang, Y. Sun, Z. Liu, S. E. Sarma, M. M. Bronstein, J. M. Solomon. "Dynamic graph CNN for learning on point clouds. ACM Transactions on Graphics, vol. 38, pp. 1-12, 2019.

[Yuan2018] W. Yuan, T. Khot, D. Held, C. Mertz, M. Hebert. PCN: Point completion network. In 2018 International Conference on 3D Vision (3DV), pp. 728-737, 2018.

[Yuan2019] W. Yuan, D. Held, C. Mertz, M. Hebert. Iterative transformer network for 3D point cloud. arXiv preprint arXiv:1811.11209, 2019.

[Zhou2919] Y. Zhou, C. Barnes, J. Lu, J. Yang, H. Li. On the continuity of rotation representations in neural networks. In Proceedings of the IEEE/CVF Conference on Computer Vision and Pattern Recognition (CVPR), pp. 5745-5753, 2019.

[Khallaghi2015a] Khallaghi et al., "Statistical biomechanical surface registration: application to MR-TRUS fusion for prostate interventions", IEEE Transactions on Medical Imaging, 2015.

[Khallaghi2015b] Khallaghi et al., "Biomechanically constrained surface registration: application to MR-TRUS fusion for prostate interventions", IEEE Transactions on Medical Imaging, 2015.

[Wang, Chen and Fang] Wang, Chen and Fang, "Non-rigid point set registration networks", arXiv, 2019.

[Wang et al] Wang et al., "Coherent point drift networks: unsupervised learning of non-rigid point set registration", arXiv, 2019.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The references above are hereby included by reference in their totality. The term "comprising" whenever used in this document is intended to indicate the presence of stated features, integers, steps, components, but not to preclude the presence or addition of one or more other features, integers, steps, components or groups thereof. Flow diagrams of particular embodiments of the presently disclosed methods are depicted in figures. The flow diagrams illustrate the functional information one of ordinary skill in the art requires to perform said methods required in accordance with the present disclosure. It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order. The disclosure should not be seen in any way restricted to the embodiments described and a person with ordinary skill in the art will foresee many possibilities to modifications thereof. The above-described embodiments are combinable. The following claims further set out particular embodiments of the disclosure.

## Claims

1. Device for obtaining a full-surface estimate of an organ, configured to estimate pose, size and shape of the organ from received medical imaging data comprising a partial-surface point cloud of the organ, the device comprising an electronic data processor adapted to perform said full-surface estimate by comprising:

     a pose estimator arranged to estimate the pose and size of the received partial-surface point cloud and to convert the received partial-surface point cloud to a partial-surface point cloud which is canonical in pose and size, comprising:

          an artificial neural network arranged to estimate a rotation matrix, a translation vector and a scale factor of the received partial-surface point cloud;

a similarity spatial transformer arranged to output a similarity transformation of the partial-surface point cloud by translating by the estimated translation vector, rotating by the estimated rotation matrix, and scaling by the estimated scale factor;

a shape estimator arranged to estimate the shape of the transformed partial-surface point cloud using a predetermined statistical shape model of the organ defined by shape parameters, comprising:
an artificial neural network arranged to estimate, from the transformed partial-surface point cloud, said shape parameters modelled from the statistical shape model as shape reconstruction parameters.

2. Device according to the previous claim wherein the pose estimator is an iterative pose estimator for converting the received partial-surface point cloud to a partial-surface point cloud which is canonical in pose and size, comprising:

said artificial neural network, arranged to estimate an incremental rotation matrix, an incremental translation vector and an incremental scale factor of an updated partial-surface point cloud from an iteratively updated partial-surface point cloud initialized with the received partial-surface point cloud;
an updatable pose estimate storage arranged to update a currently stored pose estimate comprising the estimated rotation matrix, translation vector and scale factor with the estimated incremental rotation matrix, incremental translation vector and incremental scale factor;
said similarity spatial transformer, arranged to do a similarity transformation of the iteratively updated partial-surface point cloud by translating by the estimated incremental translation vector, rotating by the estimated incremental rotation matrix and scaling by the estimated incremental scale factor, and output the iteratively updated partial-surface point cloud.

3. Device for obtaining a point cloud full-surface estimate of an organ, according to any of the previous claims, further comprising:
a point cloud reconstructor arranged to output the point cloud full-surface estimate of the organ, comprising:

a sampler arranged to sample full-surface points from the shape model of the organ parametrized with the shape reconstruction parameters;
a similarity spatial transformer arranged to output a similarity transformation of the sampled full-surface points by inverse rotating by the estimated rotation matrix, scaling by the multiplicative inverse of the estimated scale factor and translating by the negative of the estimated translation vector.

4. Device for obtaining a full-surface estimate of an organ, configured to estimate pose, size and shape of the organ from received medical imaging data comprising a partial-surface point cloud of the organ, the device comprising an electronic data processor adapted to perform said full-surface estimate, and comprising:

a pose estimator arranged to estimate the pose of the received partial-surface point cloud and to convert the received partial-surface point cloud to a partial-surface point cloud which is canonical in pose, comprising:

an artificial neural network arranged to estimate a rotation matrix and a translation vector of the received partial-surface point cloud;
a rigid spatial transformer arranged to output a rigid transformation of the partial-surface point cloud by translating by the estimated translation vector and rotating by the estimated rotation matrix;

a shape estimator arranged to estimate the shape of the transformed partial-surface point cloud using a predetermined statistical shape model of the organ defined by shape parameters, the model embedding a scale component, comprising:
an artificial neural network arranged to estimate, from the transformed partial-surface point cloud, said shape parameters modelled from the statistical shape model as shape reconstruction parameters, including a scaling component.

5. Device according to the previous claim wherein the pose estimator is an iterative pose estimator for converting the received partial-surface point cloud to a partial-surface point cloud which is canonical in pose, comprising:

said artificial neural network, arranged to estimate an incremental rotation matrix and an incremental translation vector of an updated partial-surface point cloud from an iteratively updated partial-surface point cloud initialized with the received partial-surface point cloud;

an updatable pose estimate storage arranged to update a currently stored pose estimate comprising the estimated rotation matrix and translation vector with the estimated incremental rotation matrix and incremental translation vector;

said rigid spatial transformer, arranged to do a rigid transformation of the iteratively updated partial-surface point cloud by translating by the estimated incremental translation vector and rotating by the estimated incremental rotation matrix, and output the iteratively updated partial-surface point cloud.

6. Device for obtaining a point cloud full-surface estimate of an organ, according to claim 4 or 5, further comprising:
   a point cloud reconstructor arranged to output the point cloud full-surface estimate of the organ, comprising:

   a sampler arranged to sample full-surface points from the shape model of the organ parametrized with the shape reconstruction parameters;
   a rigid spatial transformer arranged to output a rigid transformation of the sampled full-surface points by inverse rotating by the estimated rotation matrix and translating by the negative of the estimated translation vector.

7. Device according to claim 3 or 6 wherein the shape estimator is further arranged to estimate a sparsely defined displacement field allowing the non-rigid deformation of the reconstructed surface, by carrying out the steps of:

   mapping the concatenation between shape parameters modelled from the statistical shape model and a dimensionally-reduced representation of the transformed partial-surface point cloud into a three-dimensional sparse displacement vector field;
   interpolating a per-point displacement vector for the sampled full-surface points from the vector field;
   non-rigidly deforming the sampled full-surface points using the interpolated per-point displacement vectors.

8. Device according to any of the previous claims wherein the artificial neural network of the pose estimator is a encoder-decoder artificial neural network comprising an encoder arranged for dimensionality reduction of the received partial-surface point cloud and, if being the case, of the iteratively updated partial-surface point cloud, and a decoder for estimating pose and, if applicable, size.

9. Device according to any of the previous claims wherein the artificial neural network of the shape estimator is an encoder-decoder artificial neural network comprising an encoder arranged for dimensionality reduction of the transformed partial-surface point cloud and a decoder for estimating the shape parameters.

10. Device according to any of the previous claims wherein the received medical imaging data comprises a partial-surface point cloud of the organ originating from ultrasound data or magnetic resonance imaging data or fluoroscopy data.

11. Method for obtaining a full-surface estimate of an organ, to estimate pose, size and shape of the organ from received medical imaging data comprising a partial-surface point cloud of the organ, the method comprising the use of an electronic data processor adapted to perform said full-surface estimate, and the method comprising:

   estimating the pose and size of the received partial-surface point cloud and converting the received partial-surface point cloud to a partial-surface point cloud which is canonical in pose and size, by:

      using an artificial neural network to estimate a rotation matrix, a translation vector and a scale factor of the received partial-surface point cloud;
      using a similarity spatial transformer to output a similarity transformation of the partial-surface point cloud by translating by the estimated translation vector, rotating by the
      estimated rotation matrix, and scaling by the estimated scale factor;

   estimating the shape of the transformed partial-surface point cloud using a predetermined statistical shape model of the organ defined by shape parameters, by:
   using an artificial neural network to estimate, from the transformed partial-surface point cloud, said shape parameters modelled from the statistical shape model as shape reconstruction parameters.

12. Method according to the previous claim for iteratively estimating the pose and size of the received partial-surface point cloud for converting the received partial-surface point cloud to a partial-surface point cloud which is canonical in pose and size, comprising:

using said artificial neural network to estimate an incremental rotation matrix, an incremental translation vector and an incremental scale factor of an updated partial-surface point cloud from an iteratively updated partial-surface point cloud initialized with the received partial-surface point cloud;

updating an updatable pose estimate storage with a currently stored pose estimate comprising the estimated rotation matrix, translation vector and scale factor with the estimated incremental rotation matrix, incremental translation vector and incremental scale factor;

using said similarity spatial transformer to output a similarity transformation of the iteratively updated partial-surface point cloud by translating by the estimated incremental translation vector, rotating by the estimated incremental rotation matrix and scaling by the estimated incremental scale factor, and output the iteratively updated partial-surface point cloud.

13. Method for obtaining a full-surface estimate of an organ, to estimate pose, size and shape of the organ from received medical imaging data comprising a partial-surface point cloud of the organ, the method comprising the use of an electronic data processor adapted to perform said full-surface estimate, and the method comprising:

estimating the pose of the received partial-surface point cloud and converting the received partial-surface point cloud to a partial-surface point cloud which is canonical in pose, by:

using an artificial neural network to estimate a rotation matrix and a translation vector of the received partial-surface point cloud;

using a rigid spatial transformer to output a rigid transformation of the partial-surface point cloud by translating by the estimated translation vector and rotating by the estimated rotation matrix;

estimating the shape of the transformed partial-surface point cloud using a predetermined statistical shape model of the organ defined by shape parameters, the model embedding a scale component, by:

using an artificial neural network to estimate, from the transformed partial-surface point cloud, said shape parameters modelled from the statistical shape model as shape reconstruction parameters, including a scaling component.

14. Computer program instructions for implementing a device for obtaining a point cloud full-surface estimate of an organ, configured to estimate pose, size and shape of the organ from received medical imaging data comprising a partial-surface point cloud of the organ, which when executed by a processor, cause the processor to carry out the method of any of the claims 11-13.

15. Non-transitory computer-readable medium comprising the computer program instructions according to the previous claim.

Acquisition of referenced
(sparse) image data stream → 1001

Delineation of object of
interest in the images → 1002

Creation of partial point
cloud of object of interest → 1003

Reconstruction of object of
interest's full surface → 1004

Downstream clinical
application → 1005

**Fig. 1**

Partial point cloud of
object of interest → 1011

Statistical shape model of
object of interest

Deep surface
reconstruction system → 1013

1012

Reconstructed full surface
of object of interest → 1014

**Fig. 2**

Partial PC

Canonical Partial PC

Iterative Pose Estimator

Point Cloud Reconstruction

Shape Estimator

Full PC

**Fig. 3**

Collect a set of sample shapes of the object of interest → 1021

Spatially align all shapes and estimate correspondences → 1022

Create statistical shape model of the object of interest → 1023

**Fig. 4**

## Partial PC

(A) **Iterative Pose Estimator**

$$R_{it} = R_{it-1}\Delta R$$
$$T_{it} = (s_{it-1}^{-1} \cdot R_{it-1}\Delta T^T)^T + T_{it-1}$$
$$s_{it} = s_{it-1} \cdot \Delta s$$

**Update pose**

$R_0$ $I_{3\times3}$   $T_0$ $0_{1\times3}$   $s_0$ $0_{1\times1}$

$\Delta R$   $\Delta T$   $\Delta s$

$R_L$   $T_L$   $s_L$

$\mathcal{L}_{rot}$   $\mathcal{L}_{trans}$   $\mathcal{L}_{scale}$

$$X_{it+1} = (X_{it} + \Delta T) \times (\Delta R \cdot \Delta s)$$
$$it = it + 1$$

**Transform PC**

Repeat until $it = L$

**Full PC**

## Canonical Partial PC

(B) **Shape Estimator**

Encoder — Decoder — $b$ — $\mathcal{L}_{shape}$

(C) **PC Reconstruction**

$$\left(\frac{1}{s_L} \cdot R_L\right) \circ \left(\overline{X} + \Phi(\lambda \circ b)\right) - T_L$$

$\mathcal{L}_{recon}$

**Fig. 5**

---

**Partial PC**

$$R_{it} = R_{it-1}\Delta R$$
$$T_{it} = (s_{it-1}^{-1} \cdot R_{it-1}\Delta T^T)^T + T_{it-1}$$
$$s_{it} = s_{it-1} \cdot \Delta s$$

**Update pose**

$R_0$ $I_{3\times3}$   $T_0$ $0_{\cdot\times3}$   $s_0$ $0_{1\times1}$

**Pose parameters**

Encoder — Decoder

$1 \times C_{pose}$   $1 \times K_{pose}$

$\Delta R$   $\Delta T$   $\Delta s$

$R_L$   $T_L$   $s_L$

$\mathcal{L}_{rot}$   $\mathcal{L}_{trans}$   $\mathcal{L}_{scale}$

$$X_{it+1} = (X_{it} + \Delta T) \times (\Delta R \cdot \Delta s)$$
$$it = it + 1$$

**Transform PC**

Repeat until $it = L$

**Partial PC in canonical pose**

**Fig. 5a**

---

**Partial PC in canonical pose**

$N_X \times 3$

Encoder — Decoder

$1 \times C_{shape}$

**Shape vector**

$b$   $\mathcal{L}_{shape}$

$1 \times K_{shape}$

**Fig. 5b**

$$\left( \frac{1}{s_L} \cdot R_L \right) \circ \left( \overline{X} + \boldsymbol{\Phi}(\boldsymbol{\lambda} \circ \boldsymbol{b}) \right) - T_L$$

Pose: $R_L$, $T_L$, $s_L$

Shape: $\boldsymbol{b}$

Statistical shape model

Full PC

$N_Y \times 3$

$\mathcal{L}_{recon}$

**Fig. 5c**

Deep surface reconstruction

Subject's kidney → Acquisition & delineation → Partial point cloud → Pose estimation → Canonical partial point cloud → Shape estimation → Canonical reconstructed kidney → Revert posing → Reconstructed kidney

**Fig. 6**

Deep surface reconstruction

Subject's bladder → Acquisition & delineation → Partial point cloud → Pose estimation → Canonical partial point cloud → Shape estimation → Canonical reconstructed bladder → Revert posing → Reconstructed bladder

**Fig. 7**

Subject's
heart ventricles

Acquisition
& delineation

Partial
point cloud

Deep surface
reconstruction

Reconstructed
heart ventricles

**Fig. 8**

**Fig. 9**

Fig. 10

Fig. 11

Fig. 12

Fig.13

Fig. 14

Fig. 15

A

B

∴ Input partial point cloud

- - Ground truth shape

— DSR-reconstructed shape

**Fig. 16**

## EUROPEAN SEARCH REPORT

**Application Number**

EP 24 20 9573

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KHALLAGHI SIAVASH ET AL: "Statistical Biomechanical Surface Registration: Application to MR-TRUS Fusion for Prostate Interventions", IEEE TRANSACTIONS ON MEDICAL IMAGING, IEEE, USA, vol. 34, no. 12, 1 December 2015 (2015-12-01), pages 2535-2549, XP011591065, ISSN: 0278-0062, DOI: 10.1109/TMI.2015.2443978 [retrieved on 2015-11-25] | 1,4,10, 11,13-15 | INV. G06T7/149 G06T17/20 |
| A | * abstract; figure all * * page 2538 top left column * * page 2538, right column chapter II method A. Clinical workflow * * page 2538, right column section C Probabilistic SSM-FEM * * page 2546 section IV Discussion and conclusions * | 2,3,5-9, 12 | |
| A | US 9 501 829 B2 (BOSTON SCIENT NEUROMODULATION CORP [US]) 22 November 2016 (2016-11-22) * the whole document * | 1-15 | **TECHNICAL FIELDS SEARCHED (IPC)** G06T |
| A | US 2016/364880 A1 (BARRATT DEAN [GB] ET AL) 15 December 2016 (2016-12-15) * the whole document * | 1-15 | |

The present search report has been drawn up for all claims

| Place of search | Date of completion of the search | Examiner |
|---|---|---|
| The Hague | 17 March 2025 | Winne, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 20 9573

17-03-2025

| Patent document cited in search report | | Publication date | Patent family member(s) | | Publication date |
|---|---|---|---|---|---|
| US 9501829 | B2 | 22-11-2016 | AU | 2012236737 A1 | 12-09-2013 |
| | | | AU | 2012236738 A1 | 12-09-2013 |
| | | | AU | 2012236742 A1 | 12-09-2013 |
| | | | AU | 2012236745 A1 | 12-09-2013 |
| | | | CA | 2828295 A1 | 04-10-2012 |
| | | | CA | 2828298 A1 | 04-10-2012 |
| | | | CA | 2828302 A1 | 04-10-2012 |
| | | | CA | 2828318 A1 | 04-10-2012 |
| | | | EP | 2691896 A2 | 05-02-2014 |
| | | | EP | 2691898 A2 | 05-02-2014 |
| | | | EP | 2691899 A2 | 05-02-2014 |
| | | | EP | 2691900 A2 | 05-02-2014 |
| | | | JP | 6005723 B2 | 12-10-2016 |
| | | | JP | 2014513622 A | 05-06-2014 |
| | | | JP | 2014514056 A | 19-06-2014 |
| | | | JP | 2014518516 A | 31-07-2014 |
| | | | JP | 2014522247 A | 04-09-2014 |
| | | | US | 2012314919 A1 | 13-12-2012 |
| | | | US | 2012314923 A1 | 13-12-2012 |
| | | | US | 2012314924 A1 | 13-12-2012 |
| | | | US | 2012330374 A1 | 27-12-2012 |
| | | | US | 2013054270 A1 | 28-02-2013 |
| | | | US | 2014149929 A1 | 29-05-2014 |
| | | | US | 2016048962 A1 | 18-02-2016 |
| | | | US | 2016225152 A1 | 04-08-2016 |
| | | | WO | 2012135190 A2 | 04-10-2012 |
| | | | WO | 2012135191 A2 | 04-10-2012 |
| | | | WO | 2012135195 A2 | 04-10-2012 |
| | | | WO | 2012135198 A2 | 04-10-2012 |
| US 2016364880 | A1 | 15-12-2016 | AU | 2015225921 A1 | 08-09-2016 |
| | | | CA | 2940992 A1 | 11-09-2015 |
| | | | EP | 3114645 A1 | 11-01-2017 |
| | | | JP | 2017512522 A | 25-05-2017 |
| | | | US | 2016364880 A1 | 15-12-2016 |
| | | | WO | 2015132575 A1 | 11-09-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. J. BESL** ; **N. D. MCKAY**. Method for registration of 3-D shapes.. *In Sensor fusion IV: control paradigms and data structures*, 1992, 586-606
- **T. F. COOTES** ; **C. J. TAYLOR** ; **D. H. COOPER** ; **J. GRAHAM.** Active shape models-their training and application.. *Computer Vision and Image Understanding*, 1995, vol. 61, 38-59
- **J. GOMES-FONSECA** ; **S. QUEIRÓS** ; **P. MORAIS** ; **A. C. M. PINHO** ; **J. C. FONSECA** ; **J. CORREIA-PINTO** ; **E. LIMA** ; **J. VILAÇA.** Surface-based registration between CT and US for image-guided percutaneous renal access - A feasibility study.. *Medical Physics*, 2019, vol. 46 (3), 1115-1126
- **J. GOMES-FONSECA** ; **F. VELOSO** ; **S. QUEIRÓS** ; **P. MORAIS** ; **A. C. M. PINHO** ; **J. C. FONSECA** ; **J. CORREIA-PINTO** ; **E. LIMA** ; **J. L. VILAÇA.** Technical Note: Assessment of electromagnetic tracking systems in a surgical environment using ultrasonography and ureteroscopy instruments for percutaneous renal access.. *Medical Physics*, 2020, vol. 47 (1), 19-26
- **J. C. GOWER.** Generalized Procrustes Analysis.. *Psychometrika*, 1975, vol. 40, 33-51
- **O. HIROSE.** Dependent landmark drift: robust point set registration with a Gaussian mixture model and a statistical shape model.. *arXiv preprint arXiv:1711.06588*, 2018
- **A. FEDOROV** ; **R. BEICHEL** ; **J. KALPATHY-CRAMER** ; **J. FINET** ; **J-C. FILLION-ROBIN** ; **S. PUJOL** ; **C. BAUER** ; **D. JENNINGS** ; **F.M. FENNESSY** ; **M. SONKA**. 3D Slicer as an Image Computing Platform for the Quantitative Imaging Network. *Magnetic Resonance Imaging*, 2012, vol. 30 (9), 1323-41
- **D. P. KINGMA** ; **J. BA. ADAM**. A method for stochastic optimization.. *arXiv preprint arXiv:1412.6980*, 2014
- **A. MYRONENKO** ; **X. SONG**. Point set registration: Coherent point drift.. *IEEE Transactions on Pattern Analysis and Machine Intelligence*, 2010, vol. 32, 2262-2275
- **C. R. QI** ; **H. SU** ; **K. MO** ; **L. J. GUIBAS.** Pointnet: Deep learning on point sets for 3d classification and segmentation.. *Proceedings of the IEEE Conference on Computer Vision and Pattern Recognition (CVPR)*, 2017, 652-660
- **C. R. QI** ; **L. YI** ; **H. SU** ; **L. J. GUIBAS.** PointNet++: deep hierarchical feature learning on point sets in a metric space.. *In Proceedings of the 31st International Conference on Neural Information Processing Systems*, 2017, 5105-5114
- **A. RASOULIAN** ; **R. ROHLING** ; **P. ABOLMAESUMI.** Group-wise registration of point sets for statistical shape models.. *IEEE Transactions on Medical Imaging*, 2012, vol. 31, 2025-2034
- **N. RAVIKUMAR** ; **A. GOOYA** ; **S. ÇIMEN** ; **A. F. FRANGI** ; **Z. A. TAYLOR**. Group-wise similarity registration of point sets using Student's t-mixture model for statistical shape models.. *Medical Image Analysis*, 2018, vol. 48, 156-176
- **Y. WANG** ; **Y. SUN** ; **Z. LIU** ; **S. E. SARMA** ; **M. M. BRONSTEIN** ; **J. M. SOLOMON.** Dynamic graph CNN for learning on point clouds.. *ACM Transactions on Graphics*, 2019, vol. 38, 1-12
- **W. YUAN** ; **T. KHOT** ; **D. HELD** ; **C. MERTZ** ; **M. HEBERT**. PCN: Point completion network.. *International Conference on 3D Vision (3DV)*, 2018, 728-737
- **W. YUAN** ; **D. HELD** ; **C. MERTZ** ; **M. HEBERT.** Iterative transformer network for 3D point cloud.. *arXiv preprint arXiv:1811.11209*, 2019
- **Y. ZHOU** ; **C. BARNES** ; **J. LU** ; **J. YANG** ; **H. LI.** On the continuity of rotation representations in neural networks.. *Proceedings of the IEEE/CVF Conference on Computer Vision and Pattern Recognition (CVPR)*, 2019, 5745-5753
- **KHALLAGHI et al.** Statistical biomechanical surface registration: application to MR-TRUS fusion for prostate interventions. *IEEE Transactions on Medical Imaging*, 2015
- **KHALLAGHI et al.** Biomechanically constrained surface registration: application to MR-TRUS fusion for prostate interventions. *IEEE Transactions on Medical Imaging*, 2015
- **WANG, CHEN** ; **FANG**. Non-rigid point set registration networks. *arXiv*, 2019
- **WANG et al.** Coherent point drift networks: unsupervised learning of non-rigid point set registration. *arXiv*, 2019